# EUROPEAN PATENT SPECIFICATION

(11) **EP 3 700 306 B1**
(45) Date of publication and mention of the grant of the patent: **12.04.2023**
(21) Application number: 19159094.2
(22) Date of filing: 25.02.2019
(51) Int. Cl.: H05B 47/19

(54) **METHOD FOR TRANSMITTING A RADIO SIGNAL IN A LIGHTING SYSTEM**
VERFAHREN ZUM SENDEN EINES FUNKSIGNALS IN EINEM BELEUCHTUNGSSYSTEM
PROCÉDÉ DE TRANSMISSION D'UN SIGNAL RADIO DANS UN SYSTÈME D'ÉCLAIRAGE

(43) Date of publication of application: 26.08.2020
(73) Proprietor: Zumtobel Lighting GmbH, 6850 Dornbirn (AT)
(72) Inventor: Block, Steffen, 6912 Hörbranz (AT)
(74) Representative: Beder, Jens

(56) References cited:
- US-A1- 2003 216 149
- US-A1- 2007 063 914
- US-A1- 2016 223 153

## Description

The invention relates to the transmission of control signals or other signals in a lighting system. More specifically, the invention relates to a lighting system and method, in which radio signals are transferred between components of the lighting system or are forwarded by the lighting system.

In building automation, a controller sends commands and control signals to lighting or other devices based on sensor signals indicating brightness, temperature, humidity, presence of persons and other essential elements, wherein the signals are transmitted by wireless link or cable.

Emergency lighting systems require the provision of tests and checks. WO 2012/089355 A1 discloses an emergency lighting system, in which a controller communicates wirelessly with emergency luminaires directly or via repeaters.

Further, the system can support data transmission not related to the building automation or lighting control. DE 10 2011 007 416 A1 discloses a lighting system, in which a ceiling lamp comprises a wireless network module to provide Internet access.

The quality and range of the radio connection depends on spatial conditions. In particular, walls and furnishings affect transmission range. Repeaters can be used to extend transmissions so that the signal can cover longer distances or be received on the other side of an obstruction object. However, such system is complex and expensive.

A lighting system, in which all features of the preamble of claim 1 are disclosed, is described in US 2016/223153 A1.

US 2007/063914 A1 discloses a system for distributing and gathering wireless signals in buildings, in which the wireless signals are transmitted by a wireless waveguide including a hollow cross-section structural construction.

It is an object of the present invention to overcome the above-mentioned drawbacks and to provide an improved lighting system. More specifically, it is an object of the invention to provide a lighting system for transmitting a radio signal in a lighting system, with which a radio signal can be transmitted over long distances or difficult areas with low effort and costs.

This object is achieved by a system according to the enclosed independent claim: Advantageous features of the present invention are defined in the corresponding dependent claims.

According to the present invention, the lighting system comprises at least one mounting rail for carrying luminaires and/or other devices and a transmitter for sending a radio signal, wherein the mounting rail comprises at least one waveguide for transmitting the radio signal send from the transmitter.

With the present invention, the radio signal can be transmitted via the waveguide over long distances or difficult areas and the waveguide can easily be integrated into the mounting rail of a long strip lighting, wherein the waveguide is a metal tube with a circular or rectangular cross section, which is formed from the mounting rail, mounted on the mounting rail or inserted in the mounting rail.

The radio signal can be a control or status signal that is transmitted between components of the lighting system or can be a signal that is not related to the lighting system, e.g., an audio signal, video signal or a signal used for position determination/indoor navigation. The radio signal can be transmitted by the waveguide in both directions (bidirectional).

The waveguide comprises a window or slot for emitting the radio signal at the required position.

The window or the slot is located at a device (luminaire or sensor), which is mounted on the mounting rail and to which the radio signal is to be transmitted, wherein the device comprises a receiving means for receiving the emitted radio signal.

In addition, the lighting system can comprise a repeater for receiving the radio signal transmitted by the waveguide and for retransmitting the received radio signal to a receiving unit (device) located outside the waveguide.

A repeater can also be used within a long waveguide and/or between consecutive mounting rails, wherein the lighting system comprises a first mounting rail, a second mounting rail and a repeater for receiving the radio signal transmitted by the waveguide of the first mounting rail and retransmitting the received the radio signal in the waveguide of the second mounting rail.

In addition, the repeater can be configured to retransmit the received radio signal in the waveguide of the second mounting rail and to a receiving unit located outside the waveguide. The radio signal can be transmitted to a sensor for detecting brightness, temperature, humidity or presence of persons, wherein the sensor comprises the receiving unit.

Alternatively, the radio signal can be transmitted to a control device for controlling and/or configuring the lighting system, wherein the control device comprises the receiving unit.

The waveguide can comprise openable windows or slots at various locations, so that the user can select a desired location for emitting the radio signal by opening the window or slot.

The transmitter can be a Bluetooth transmitter that transmits the radio signal using shortwavelength UHF radio waves in the ISM band from 2,4 to 2,485 GHz.

Alternatively or in addition, the transmitter can be a repeater for receiving the radio signal transmitted by a transmitter unit located outside the waveguide and retransmitting the received radio signal in the waveguide.

A plurality of different radio signals can be transmitted by a plurality of waveguides, wherein the mounting rail comprises a waveguide for each radio signal.

In addition, the transmitter can be a central transmitter unit, which transmits the plurality of different radio signals by sending one radio signal of the plurality of different radio signals in each waveguide.

Some or all of waveguides can comprise a window or slot for emitting the respective radio signal at an individual position of the mounting rail.

The invention will now be explained in more detail with reference to the accompanying drawings, wherein:
FIG. 1 shows a lighting system according to a first embodiment of the present invention,
FIG. 2 shows a lighting system according to a second embodiment of the present invention,
FIG. 3 shows a lighting system according to a third embodiment of the present invention, and
FIG. 4 shows a flowchart of the method according to an embodiment of the present invention.

The same features are denoted by the same reference signs throughout all figures.

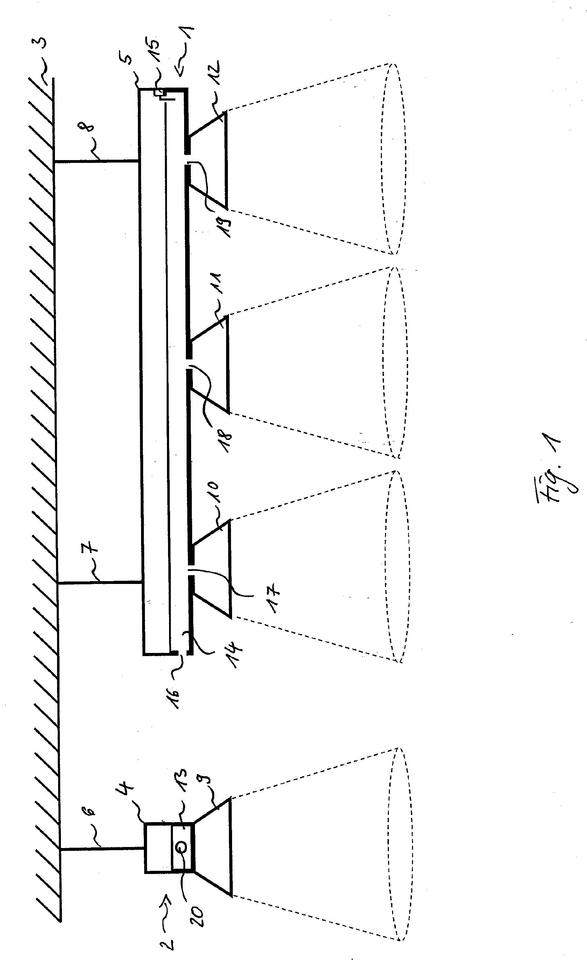

FIG. 1 shows a lighting system according to a first embodiment of the present invention. The lighting system shown in FIG. 1 consists of a first light band 1 (strip light) and a second light band 2, which are mounted at a right angle to each other on a ceiling 3. Each of the first light band 1 and the second light band 2 comprises a mounting rail 4, 5 fixed to the ceiling 3 with cord suspension 6..8, four luminaires 9..12 mounted on the mounting rails 4, 5 and a waveguide 13, 14 inserted into or formed by the mounting rail 4, 5. The first light band 1 includes a transmitter 15 that emits a radio signal into the waveguide 14 of the first light band 1. The transmitter 15 is a Bluetooth transmitter that operates at 2,4 GHz and transmits the radio signal using a wavelength λ of 125 mm. A control unit (not shown) is connected to the transmitter 15 via cable and outputs, to the transmitter 15, a command to switch on/off the luminaires 9..12. Other frequencies or transmission standards may be used as well.

The waveguide 14 is a metal tube with rectangular cross section with, in case of the above mentioned Bluetooth signal, a width of λ/2 = 62 mm and comprises windows 16..19 (openings) with a width of λ/2 or λ/4 for the radio signal, wherein the window 16 is located at the front end of the mounting rail 5 facing the second light band 2 and the windows 17, 18 and 19 are located at the luminaires 10, 11 and 12, respectively. The radio signal sent by the transmitter 15 to switch on/off the luminaires 9..12 is transmitted by the waveguide 13 and emitted by the windows 16..19. The luminaires 10, 11 and 12 receive the radio signal emitted by the windows 17, 18 and 19, respectively. In case that signals with other wavelengths are used, the dimensions must be adapted accordingly.

The second light band 2 comprises a repeater 20 that receives the radio signal emitted by the window 16 and retransmits the received radio signal in the fwaveguide 13. The radio signal transmitted by the waveguide 13 is emitted by one or more windows (not shown) of the waveguide 13 and received by the three luminaires 9 as outlined above. With the radio signal, the luminaires 9..12 can be controlled, for example, switched on/off together or separately, dimmed, ... wherein each luminaire 9..12 can be addressed by a separate 3-Bit address. Generally, every function provided by the luminaire, including setting of parameters, may be controlled by a radio signal transmitted using the waveguide 13, 14.

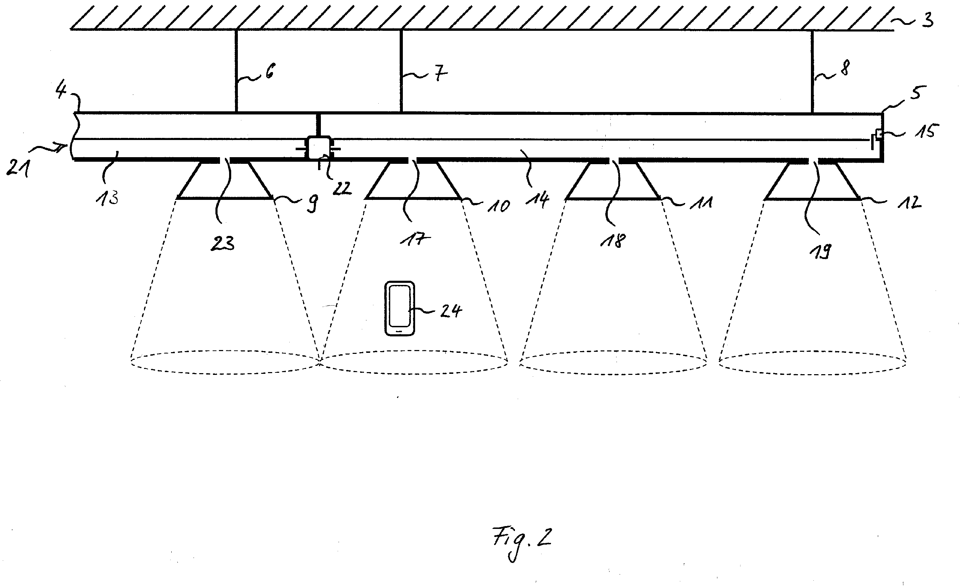

FIG. 2 shows a lighting system according to a second embodiment of the present invention. In the lighting system shown in FIG. 2, the mounting rails 4 and 5 are firmly connected together to commonly form one light band 21 and a repeater 22 is arranged between the waveguide 13 and the further waveguide 14. The repeater 22 receives the radio signal sent by the transmitter 15 and transmitted along the waveguide 14 and retransmits the received radio signal into the waveguide 13, wherein the radio signal sent by the transmitter 15 is emitted by the windows 17..19 of the waveguide 14 and the radio signal sent by the repeater 22 is emitted by the windows 23 of the further waveguide 13 so that the luminaires 9..12 can be switched on/off or other functions can be controlled.

Further, the repeater 22 is configured to send the radio signal or another radio signal received from the transmitter 15 via the waveguide 14 to a control device 24 located outside the light band 21. The control device 24 is adapted to display information on the switching state of the luminaires 9..12 or information on the set dimming level and/or light temperature und is adapted to generate and transmit commands to control and/or configure the lighting system. The repeater 22 is configured to receive a control signal from the control device 24 and to retransmit the control signal to the transmitter 15 via the waveguide 14, wherein the control unit 24 controls luminaires 9..12 of the light band 21 or sets the operating parameters based on the commands received by the transmitter 15.

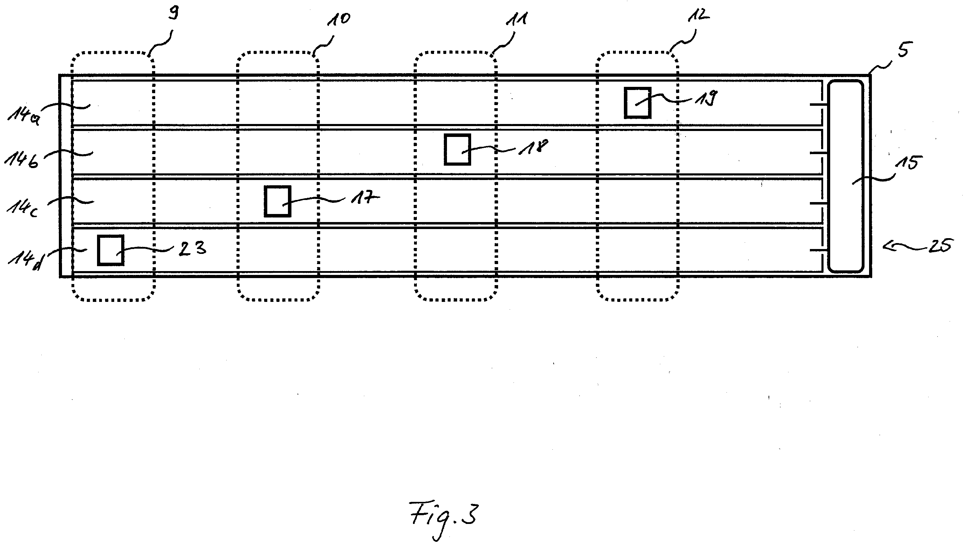

The radio signal can contain a universal, unique identifier that is used by a device to determine its location or a luminaire 9..12 of the lighting system. FIG. 3 shows, when viewed from below, a lighting system according to a third embodiment of the present invention, in which such radio signals are transmitted. In the lighting system shown in FIG. 3, the mounting rail 5 of a light band 25 includes four parallel waveguides 14a, 14b, 14c, 14d for transmitting an individual radio signal to each of the four luminaires 9..12 mounted on the mounting rail 5. The light band 25 can be installed in a showroom, in which an exhibited object is positioned under each luminaire 9..12 and a location/object-based action is performed by a mobile device when the mobile device is near to an object.

The radio signals are sent by the transmitter 15 and are formed of a set of Bluetooth beacons in the waveguides 14a, 14b, 14c, 14d and are emitted by the windows 17, 18, 19 and 23 located close to the luminaires 9..12, wherein the transmitter 15 is configured to send a radio signal having a first identifier in the waveguide 14a, a radio signal having a second identifier in the waveguide 14b, a radio signal having a third identifier in the waveguide 14c and a radio signal having a fourth identifier in the waveguide 14d. The mobile device (not shown) that receives one of the radio signals emitted by windows 17..19, 23 detects the identifier and performs an action assigned to the detected identifier. Alternatively, the radio signals can be used in indoor positioning/navigation systems, in which the mobile device determines a position assigned to the detected identifier.

In addition, radio signals for controlling the luminaires 9..12 or other components of the lighting system can be transmitted by the waveguides 14a, 14b, 14c, 15d and/or the repeaters 20 and 22 can be used as outlined above. Instead of emitting the radio signal by the windows 17..19, 23, the radio signal transmitted by the waveguide 13, 14, 14a, 14b, 14c or 15d can be emitted by a slotted antenna (slot) or a repeater 20, 22. The waveguide 13, 14, 14a, 14b, 14c or 15d can comprise a plurality of openable windows 17..19, 23 or slots so that the user can select desired locations for emitting the radio signal by opening the window or slot.

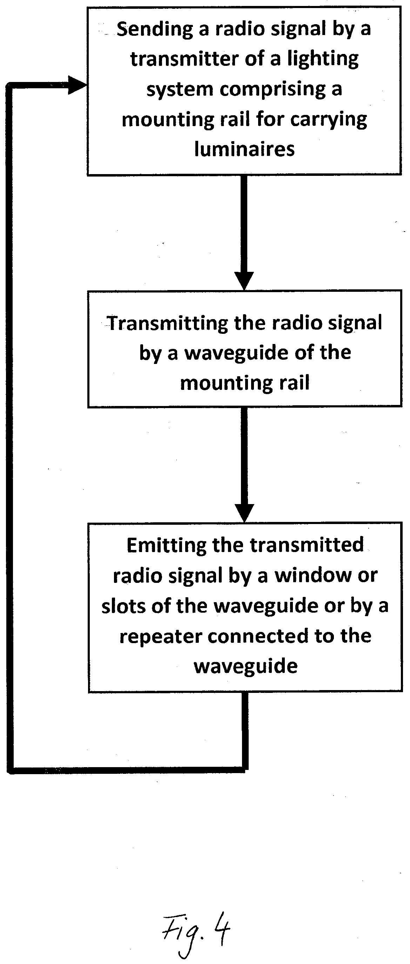

FIG. 4 shows a simplified flowchart showing the single steps performed by the realization of the method described in detail above.

## Claims

1. Lighting system, comprising
a transmitter (15) for sending a radio signal,
at least one luminaire (9..12), and at least one mounting rail (4, 5), whereby the at least one luminaire (9..12) and the transmitter (15) are carried by the mounting rail (4,5),
wherein the at least one mounting rail (4, 5) comprises at least one waveguide (13, 14) configured to transmit the radio signal sent by the transmitter (15) to the at least one luminaire (9..12);
**characterized in that** the waveguide (13, 14) comprises a window (17..19, 23) or slot for emitting the radio signal, and the window (17..19, 23) or the slot is located at the at least one luminaire mounted on the mounting rail (4, 5), wherein the at least one luminaire comprises a receiving means for receiving the emitted radio signal.

2. The lighting system according to claim 1, further comprising
a repeater (20, 22) for receiving the radio signal transmitted by the waveguide (13, 14) and retransmitting the received radio signal to a receiving unit located outside the waveguide.

3. The lighting system according to claim 1 or 2, wherein
the lighting system comprises a first mounting rail (5), a second mounting rail (4) and a repeater (20, 22) for receiving the radio signal transmitted by the waveguide (13, 14) of the first mounting rail (5) and retransmitting the received radio signal in the waveguide of the second mounting rail (4).

4. The lighting system according to claim 3, wherein
the repeater (20, 22) is configured to retransmit the received radio signal in the waveguide of the second mounting rail (4, 5) and to a receiving unit located outside the waveguide (13, 14).

5. The lighting system according to claim 2 or4, further comprising
a sensor for detecting brightness, temperature, humidity or presence of persons, wherein the sensor comprises the receiving unit.

6. The lighting system according to claim 2 or 4, further comprising
a control device (24) for controlling and/or configuring the lighting system, wherein the control device comprises the receiving unit.

7. The lighting system according to anyone of the preceding claims, wherein
the waveguide (13, 14) comprises a plurality of openable windows (17..19, 23) or slots for emitting the radio signal.

8. The lighting system according to anyone of the preceding claims, wherein
the transmitter (15) is a bluetooth transmitter.

9. The lighting system according to anyone of the preceding claims, wherein
the transmitter (15) is a repeater (20, 22) for receiving the radio signal transmitted by a transmitter unit located outside the waveguide (13, 14) and retransmitting the received radio signal in the waveguide (13, 14).

10. The lighting system according to anyone of the preceding claims, wherein
the mounting rail (4, 5) comprises a plurality of waveguides (13, 14) for transmitting a plurality of different radio signals.

11. The lighting system according to claim 10, wherein
the transmitter (15) is configured to send one radio signal of the plurality of different radio signals in each waveguide (13, 14).

12. The lighting system according to claim 11, wherein
each waveguide (13, 14) comprises a window or slot for emitting the respective radio signal at an individual position of the mounting rail (4, 5).

## Patentansprüche

1. Beleuchtungssystem, umfassend
einen Sender (15) zum Senden eines Funksignals,
mindestens eine Leuchte (9..12) und mindestens eine Montageschiene (4, 5), wobei die mindestens eine Leuchte (9..12) und der Sender (15) von der Montageschiene (4, 5) getragen werden,
wobei die mindestens eine Montageschiene (4, 5) mindestens einen Wellenleiter (13, 14) umfasst, der konfiguriert ist, um das von dem Sender (15) gesendete Funksignal an die mindestens eine Leuchte (9..12) zu senden;
**dadurch gekennzeichnet, dass** der Wellenleiter (13, 14) ein Fenster (17..19, 23) oder einen Schlitz zum Emittieren des Funksignals umfasst, und das Fenster (17..19, 23) oder der Schlitz sich an der mindestens einen an der Montageschiene (4, 5) montierten Leuchte befindet, wobei die mindestens eine Leuchte ein Empfangsmittel zum Empfangenen des emittierten Funksignals umfasst.

2. Beleuchtungssystem nach Anspruch 1, ferner umfassend
einen Repeater (20, 22) zum Empfangen des von dem Wellenleiter (13, 14) gesendeten Funksignals und erneutes Senden des empfangenen Funksignals an eine Empfangseinheit, die sich außerhalb des Wellenleiters befindet.

3. Beleuchtungssystem nach Anspruch 1 oder 2, wobei
das Beleuchtungssystem eine erste Montageschiene (5), eine zweite Montageschiene (4) und einen Repeater (20, 22) zum Empfangen des von dem Wellenleiter (13, 14) der ersten Montageschiene (5) gesendeten Funksignals und erneuten Senden des empfangenen Funksignals in dem Wellenleiter der zweiten Montageschiene (4) umfasst.

4. Beleuchtungssystem nach Anspruch 3, wobei
der Repeater (20, 22) konfiguriert ist, um das empfangene Funksignal in dem Wellenleiter der zweiten Montageschiene (4, 5) und an eine Empfangseinheit, die sich außerhalb des Wellenleiters (13, 14) befindet, erneut zu senden.

5. Beleuchtungssystem nach Anspruch 2 oder 4, ferner umfassend
einen Sensor zum Erfassen von Helligkeit, Temperatur, Feuchtigkeit oder Anwesenheit von Personen, wobei der Sensor die Empfangseinheit umfasst.

6. Beleuchtungssystem nach Anspruch 2 oder 4, ferner umfassend
eine Steuervorrichtung (24) zum Steuern und/oder Konfigurieren des Beleuchtungssystems, wobei die Steuervorrichtung die Empfangseinheit umfasst.

7. Beleuchtungssystem nach einem der vorstehenden Ansprüche, wobei
der Wellenleiter (13, 14) eine Vielzahl von öffnungsfähigen Fenstern (17..19, 23) oder Schlitzen zum Emittieren des Funksignals umfasst.

8. Beleuchtungssystem nach einem der vorstehenden Ansprüche, wobei
der Sender (15) ein Bluetooth-Sender ist.

9. Beleuchtungssystem nach einem der vorstehenden Ansprüche, wobei
der Sender (15) ein Repeater (20, 22) zum Empfangen des Funksignals, das von einer Sendeeinheit übertragen wird, die sich außerhalb des Wellenleiters (13, 14) befindet, und zum erneuten Senden des empfangenen Funksignals in dem Wellenleiter (13, 14) ist.

10. Beleuchtungssystem nach einem der vorstehenden Ansprüche, wobei
die Montageschiene (4, 5) eine Vielzahl von Wellenleitern (13, 14) zum Senden einer Vielzahl von unterschiedlichen Funksignalen umfasst.

11. Beleuchtungssystem nach Anspruch 10, wobei
der Sender (15) konfiguriert ist, um ein Funksignal aus der Vielzahl von unterschiedlichen Funksignalen in jedem Wellenleiter (13, 14) zu senden.

12. Beleuchtungssystem nach Anspruch 11, wobei
jeder Wellenleiter (13, 14) ein Fenster oder einen Schlitz zum Emittieren des jeweiligen Funksignals an einer individuellen Position der Montageschiene (4, 5) umfasst.

## Revendications

1. Système d'éclairage, comprenant
un émetteur (15) pour envoyer un signal radio,
au moins un luminaire (9..12), et au moins un rail de montage (4, 5), selon lequel le luminaire (9..12) et l'émetteur (15) sont supportés par le rail de montage (4, 5),
dans lequel l'au moins un rail de montage (4, 5) comprend au moins un guide d'ondes (13, 14) configuré pour transmettre le signal radio envoyé par l'émetteur (15) à l'au moins un luminaire (9.. 12) ;
**caractérisé en ce que** le guide d'ondes (13, 14) comprend une fenêtre (17..19, 23) ou une fente pour émettre le signal radio, et la fenêtre (17.. 19, 23) ou la fente est située au niveau de l'au moins un luminaire monté sur le rail de montage (4, 5), dans lequel l'au moins un luminaire comprend un moyen de réception pour recevoir le signal radio émis.

2. Système d'éclairage selon la revendication 1, comprenant en outre
un répéteur (20, 22) pour recevoir le signal radio transmis par le guide d'ondes (13, 14) et retransmettre le signal radio reçu à une unité de réception située à l'extérieur du guide d'ondes.

3. Système d'éclairage selon la revendication 1 ou 2, dans lequel
le système d'éclairage comprend un premier rail de montage (5), un second rail de montage (4) et un répéteur (20, 22) pour recevoir le signal radio transmis par le guide d'ondes (13, 14) du premier rail de montage (5) et retransmettre le signal radio reçu dans le guide d'ondes du second rail de montage (4).

4. Système d'éclairage selon la revendication 3, dans lequel
le répéteur (20, 22) est configuré pour retransmettre le signal radio reçu dans le guide d'ondes du second rail de montage (4, 5) et vers une unité de réception située à l'extérieur du guide d'ondes (13, 14).

5. Système d'éclairage selon la revendication 2 ou 4, comprenant en outre
un capteur pour détecter la luminosité, la température, l'humidité ou la présence de personnes, dans lequel le capteur comprend l'unité de réception.

6. Système d'éclairage selon la revendication 2 ou 4, comprenant en outre
un dispositif de commande (24) pour commander et/ou configurer le système d'éclairage, dans lequel le dispositif de commande comprend l'unité de réception.

7. Système d'éclairage selon l'une quelconque des revendications précédentes, dans lequel
le guide d'ondes (13, 14) comprend une pluralité de fenêtres (17..19, 23) ou de fentes ouvrables pour émettre le signal radio.

8. Système d'éclairage selon l'une quelconque des revendications précédentes, dans lequel
l'émetteur (15) est un émetteur Bluetooth.

9. Système d'éclairage selon l'une quelconque des revendications précédentes, dans lequel
l'émetteur (15) est un répéteur (20, 22) pour recevoir le signal radio émis par une unité d'émetteur située à l'extérieur du guide d'ondes (13, 14) et retransmettre le signal radio reçu dans le guide d'ondes (13, 14).

10. Système d'éclairage selon l'une quelconque des revendications précédentes, dans lequel
le rail de montage (4, 5) comprend une pluralité de guides d'ondes (13, 14) pour transmettre une pluralité de signaux radio différents.

11. Système d'éclairage selon la revendication 10, dans lequel
l'émetteur (15) est configuré pour envoyer un signal radio de la pluralité de signaux radio différents dans chaque guide d'ondes (13, 14).

12. Système d'éclairage selon la revendication 11, dans lequel
chaque guide d'ondes (13, 14) comprend une fenêtre ou une fente pour émettre le signal radio respectif à une position individuelle du rail de montage (4, 5).
